# EUROPEAN PATENT APPLICATION

(11) **EP 4 488 061 A1**
(43) Date of publication of application: **08.01.2025**
(21) Application number: 23183711.3
(22) Date of filing: 05.07.2023
(51) Int. Cl.: B32B 17/10, B60J 1/00

(54) **LAMINATED GLASS WITH AREAS OF DIFFERENT MECHANICAL PROPERTIES**

(71) Applicant: Kuraray Europe GmbH, 65795 Hattersheim (DE)
(72) Inventor: TROSKA, Christoph, 45699 Herten (DE)
(74) Representative: Janßen, Christian Oliver

(57) **Abstract**

The invention is directed to an interlayer film comprising at least two areas A1 and A2 having mechanical properties wherein each area comprises at least one layer L1 and at least one layer L2, each comprising a mixture of polyvinyl acetal resin and at least one plasticizer **characterized in that** the at least two areas A1 and A2 comprise different layers L1 and L2 to provide the at least two areas Al and A2 with different mechanical properties defined as average storage modulus G' at 1 Hz, 3 K/min and 50 °C measured according to the method described in the description and wherein the average storage modulus G' of area A1 is at least 10% higher than the average storage modulus G' of area A2.

## Description

The invention is directed to a process to produce laminated glass provided with areas of different mechanical properties due to the use of an interlayer film having different mechanical properties.

The use of laminated glass i.e. a two sheets of glass glued together by an interlayer film for windscreen and side lights in cars is a long standing industrial standard. It is well known what chemical composition of the interlayer film provides the laminated glass with what mechanical properties.

It is further a long-standing industrial standard to adjust the mechanical strength and the adhesion of the interlayer film to provide a laminated glass having a balanced mechanical strength to prevent penetration of an object on one side but to give way on impact of a pedestrian on the other side. The mechanical strength of a windscreen is measured as HIC "head injury criterion". A typical interlayer for this purpose is disclosed in EP1800855.

It is further known to provide car roofs with laminated glass. Such glazing is provided with different mechanical properties as a windscreen, since no pedestrian protection is needed and the car roof should give protection to a rollover of the car.

Presently, each of the laminated glazing for windscreens and roofs are provided in their own frame and/or are glued separately to the car body.

For aerodynamic and optical reasons, it would be beneficial to provide the windscreen and roof from one, uninterrupted piece of glazing. To that end, interlayer films with changing or different mechanical properties are needed.

Object of the present invention is therefore an interlayer film comprising at least two areas A1 and A2 having mechanical properties wherein each area comprises at least one layer L1 and at least one layer L2, each comprising a mixture of polyvinyl acetal resin and at least one plasticizer **characterized in that** the at least two areas A1 and A2 comprise different layers L1 and L2 to provide the at least two areas A1 and A2 with different mechanical properties defined as average storage modulus G' at 1 Hz, 3 K/min and 50 °C measured according to the method described in the description and wherein the average storage modulus G' of area A1 is at least 10% higher than the average storage modulus G' of area A2.

Further object of the invention is the use of or a method for using the interlayer film as disclosed herein for manufacturing laminated safety glass for automobiles, wherein area A1 of the interlayer is provided for the windscreen and area A2 is provided for at least a part of the roof of the automobile.

The change of mechanical properties takes place in direction of the sequence of areas.

To be precise, the aim of the invention is to enable manufacturing a laminated safety glass for automobiles which covers as one piece the windscreen area (with area A1) and at least a part of the roof area (with area A2) of a car. Of course, this requires glass sheets with an appropriate 3D shape.

Since the interlayer film of the invention is provided by combining two layers L1 and L2, both layers contribute to the mechanical properties. In other words, selecting the composition or the thickness of the layers L1 and L2 enables the person skilled in the art to adjust the mechanical properties of the areas A1 and A2 according to the requirements of the respective area.

The interlayer film provided for the windscreen area (i.e. area A1) should have all the necessary mechanical properties and adhesion for this application. This includes certain storage modulus G' (usually measured at 1 Hz, 3 K/min and 50 °C), certain storage modulus G', pummel values and HIC (head injury criteria), which are all known to the person skilled in the art. For example, suitable films for the windscreen area have preferably a glass-transition temperature Tg measured according to the method described below from 48 °C to 95 °C, more preferably from 50 °C to 90 °C, even more preferably from 55 °C to 85 °C and most preferably from 60 °C to 75 °C. and /or a storage modulus G' at 1 Hz, 3 K/min and 50 °C measured according to the method described below from 1 to 750 MPa, more preferably from 10 to 600 MPa, and most preferably from 20 to 550 MPa.

In the interlayer of the invention, the average storage modulus G' of area A1 is at least 10%, preferable at least 25% higher than the average storage modulus G' of area A2.

Preferable, the average glass-transition temperature Tg of area A1 measured according to the method described in the description is at least 10%, preferable at least 25% higher than the average Tg of area A2.

The different mechanical properties of the areas A1 and A2 can be adjusted by either by adjusting the composition of the layers L1 and L2 or adjusting their thickness. For example, by combining a soft layer L1 and a harder layer L2 in different thicknesses for different areas, different mechanical properties per area can be achieved.

In a first variant, the at least two layers L1 and L2 comprise the same polyvinyl acetal resin and the same plasticizers, wherein the plasticizer content in the layers L1 and L2 is different. The plasticizer content according to the present invention is measured before the layers are coming into contact with each other.

Different plasticizer content in the layers will result in different mechanical properties. Accordingly, by changing (adjusting) the plasticizer content in the layers, changing mechanical properties will result.

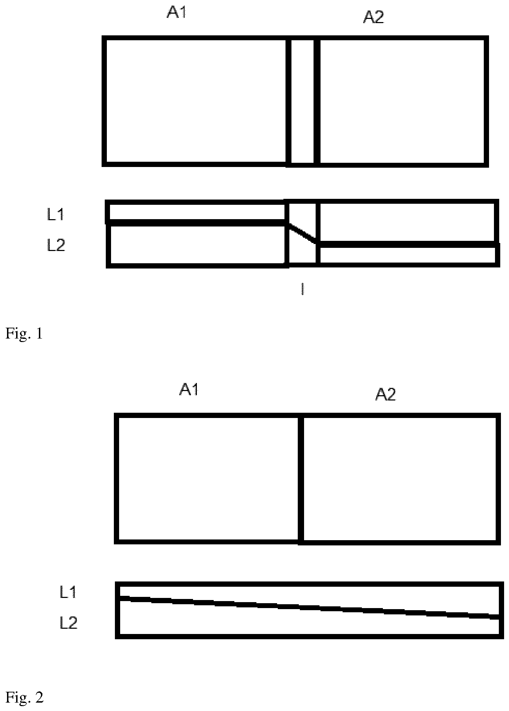

In a second variant, the composition of the layers does not change, but their thickness. Since the layers have different mechanical properties, changing mechanical properties will result. This embodiment is schematically shown in Fig. 1 and 2.

The change of mechanical properties of the at least two areas A1 and A2 may change between the areas in form of a gradient within an intermediate region. Preferable, the gradient of mechanical properties is achieved by a gradient of thickness of the layers L1 and L2 or by a change of thicknesses of the layers L1 and L2 within the intermediate region. This is shown in Fig. 1.

The term "gradient" refers to a linear change of mechanical properties. This change may take place over a certain distance, even from one end of the interlayer film to the other. The change may take place in a bridging region or intermediate region between the areas. The intermediate region may have a width of what is technically feasible to change for example from one thickness of a layer to another, like 1 to 40 cm.

In alternative, the change of mechanical properties may take place rather abrupt, i.e. without a detectable zone in which the change takes place as depicted in Fig. 2.

In a similar way as the mechanical properties, the adhesion of the areas A1 and A2 may be adjusted. As known to the person skilled in the art, adhesion of interlayer films to glass can be adjusted by adding salts of alkali metals and/or alkali earth metals. In general, the total amount of alkali metal salts may be as low as 0.005 % by weight based on the total weight of the interlayer film. Preferred ranges of alkali metal salt are 0.01 % - 0.1 %; 0.02 - 0.08 %; 0.03 - 0.06 %, each weight % based on the total weight of the interlayer film. The interlayer film may further 0 to 100 ppm alkaline earth ions, preferably 10 to 50 ppm.

In general, the number of layers L1 and L2 is not limited and usually each area comprises one layer L1 and one layer L2. However, to achieve overall sound damping properties, the areas may comprise at least two layers L1 sandwiching at least one layer L2.

The general composition of the layers should comply with the standard recipes of interlayer films and is known to the person skilled in the art.

In the following, some general teaching is given as guideline:
The different layers may contain one or more plasticizers that are common in this technical field and are known to the person skilled in the art. One or more plasticizers are particularly preferable, selected from the group of di-2-ethylhexyl sebacate, 1,2 cyclohexane dicarboxylic acid diisononyl ester, di-2-ethylhexyl adipate, di-2-ethylhexyl phthalate, dioctyl adipate, dihexyl adipate, dibutyl sebacate, di-2-butoxyethyl sebacate, triethyleneglycol-bis-2-ethylhexanoate, triethyleneglycol-bis-n-heptanoate, triethyleneglycol-bis-n-hexanoate, tetraethyleneglycol-bis-n-heptanoate, di-2-butoxyethyl adipate, di-2-butoxyethoxyethyl adipate.

In the present invention, the average degree of acetalisation of the polyvinyl butyral of the layers is preferably not less than 40 mol%, more preferably not less than 50 mol%.

The average degree of acetalisation of the polyvinyl butyral resin in the layers is preferably not more than 90 mol%, more preferably not more than 80 mol%.

The average vinyl acetate unit content of the polyvinyl butyral resin is preferably not more than 30 mol%, more preferably not more than 20 mol%.

The lower limit of the average content of the vinyl acetate units is not limited but is usually not less than 0.1 mol%.

The average content of vinyl alcohol units of the polyvinyl butyral resin is preferably not less than 5 mol%, more preferably not less than 15 mol%.

The average content of vinyl alcohol units of the polyvinyl butyral resin is preferably not more than 50 mol%, more preferably not more than 40 mol%.

The vinyl alcohol content and vinyl acetate content were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240.

### Measurement methods for Storage modulus G' and glass transition temperature Tg

Storage modulus G' and loss factor tan δ were measured using a Anton Paar MCR 302 rheometer and a plate/ plate geometry (diameter: 8 mm). The frequency was set to 1 Hz and the heating rate to 3 K/min. The measurements were performed in the linear range of deformation between -20 and +150 °C. The glass transition temperature was taken from the tan δ maximum.

PET release film between the glass and the PVB interlayer was used during the autoclave cycle to prepare the film. After the autoclave process, the release film and glass were removed and the PVB sheet was pre-dried at 65 °C for 24 h before performing the mechanical tests.

## Claims

1. Interlayer film comprising at least two areas A1 and A2 having mechanical properties wherein each area comprises at least one layer L1 and at least one layer L2, each comprising a mixture of polyvinyl acetal resin and at least one plasticizer **characterized in that** the at least two areas A1 and A2 comprise different layers L1 and L2 to provide the at least two areas A1 and A2 with different mechanical properties defined as average storage modulus G' at 1 Hz, 3 K/min and 50 °C measured according to the method described in the description and wherein the average storage modulus G' of area A1 is at least 10% higher than the average storage modulus G' of area A2.

2. The Interlayer film of claim 1 **characterized in that** the average glass-transition temperature Tg of area A1 measured according to the method described in the description is at least 10% higher than the average Tg of area A2.

3. Interlayer film according to claim 1 or 2 **characterized in that the** at least two layers L1 and L2 comprise the same polyvinyl acetal resin and the same plasticizers, wherein the plasticizer content in the layers L1 and L2 is different.

4. Interlayer film according to any of the claims 1 to 3 **characterized in that** the mechanical properties of the at least two areas A1 and A2 change between the areas in form of a gradient.

5. Interlayer film according to claim 4 **characterized in that** the gradient of mechanical properties is achieved by a gradient of thickness of the layers L1 and L2.

6. Interlayer film according to claim 4 **characterized in that** the gradient of mechanical properties is achieved by a gradient of plasticizer content of at least one of the layers L1 and L2.

7. Interlayer film according to any of the claims 1 to 3 **characterized in that** the mechanical properties of the at least two areas A1 and A2 change between the areas within an intermediate region.

8. Interlayer film according to claim 6 **characterized in that** the change of mechanical properties is achieved by a change of thicknesses of the layers L1 and L2 within the intermediate region.

9. Interlayer film according to any of the claims 1 to 8 **characterized in that** at least one of the areas A1 and A2 is wedge-shaped.

10. Interlayer film according to any of the claims 1 to 9 **characterized in that** each area comprises at least two layers L1 sandwiching at least one layer L2.

11. Use of the interlayer film according to one of the claims 1 to 10 for manufacturing laminated safety glass for automobiles, wherein area A1 of the interlayer is provided for the windscreen and area A2 is provided for at least a part of the roof of the automobile.
